# EUROPÄISCHE PATENTSCHRIFT

(11) **EP 1 306 285 B1**
(45) Veröffentlichungstag und Bekanntmachung des Hinweises auf die Patenterteilung: **02.08.2006**
(21) Anmeldenummer: 02021614.9
(22) Anmeldetag: 27.09.2002
(51) Int. Cl.: B62D 1/18

(54) **Klemm-Mechanismus für eine verstellbare Lenksäule**
Clamping mechanism for an adjustable steering column
Mecanisme de blocage d'une colonne de direction reglablé

(30) Priorität: 25.10.2001 DE 10152807
(43) Veröffentlichungstag der Anmeldung: 02.05.2003
(73) Patentinhaber: DaimlerChrysler AG, 70567 Stuttgart (DE)
(72) Erfinder: Braun, Markus, 51147 Köln (DE); Hebenstreit, Axel, 70193 Stuttgart (DE); Knoll, Karl-Heinz, 71384 Weinstadt (DE)

(56) Entgegenhaltungen:
- WO-A-01/28710
- DE-A- 10 025 979
- DE-A- 19 827 464
- FR-A- 2 687 628

## Beschreibung

Die Erfindung betrifft einen Klemm-Mechanismus für eine verstellbare Lenksäule gemäß dem Oberbegriff des Patentanspruchs 1.

Aus der gattungsgemäßen FR 2 687 628 A1 ist ein Klemm-Mechanismus bekannt, der mittels eines elektrischen Betätigungsgliedes aktiviert werden kann. Die Lenksäule ist in einer durch den Fahrer gewählten, bestimmten Position durch den Klemm-Mechanismus festgelegt. Ein durch das elektrische Betätigungsglied betätigbares Spannglied hält den Klemm-Mechanismus in einer Spannstellung. Durch die fahrerseitige Aktivierung des elektrischen Betätigungsgliedes wird das Spannglied von seiner Spannstellung in eine Nichtspannstellung gebracht, so dass der Klemm-Mechanismus außer Kraft gesetzt wird und damit die Lenksäule relativ zur fahrzeugfesten Anbindung beweglich ist.

Der Fahrer drückt um die Klemmung des Lenkrades aufzuheben, beispielsweise einen Bedienknopf, der einen elektrischen Motor aktiviert. Der Motor treibt das Spannglied an, welches dadurch in Nichtspannstellung gebracht wird. Die Klemmung ist aufgehoben.

Die in der FR 2 687 628 A1 gezeigte Klemmung hat den Nachteil, daß zum Spannen oder Lösen das Betätigungsglied um einen großen Winkel ausgelenkt werden muß.

Es ist daher Aufgabe der Erfindung, einen Klemm-Mechanismus für eine verstellbare Lenksäule mit einem elektrischen Betätigungsglied zu schaffen, der einen verbesserten Komfort bei der Bedienung der Klemmung bewirkt.

Die Aufgabe wird erfindungsgemäß mit den Merkmalen des Patentanspruchs 1 gelöst.

Das Verspannen erfolgt, indem das Spannglied zwei gegeneinander verdrehbare Spannscheiben aufweist. Durch die Verdrehung kann der durch die Spannscheiben belegte Abschnitt auf dem Spannbolzen reduziert bzw. verbreitert werden. Eine Spannscheibe wird dabei durch das elektrische Betätigungsglied angetrieben, um die Verdrehung zu erreichen.

Indem der Halter des Betätigungsglieds einteilig mit einem Bauteil eines Spanngliedes, das die nötige Klemmkraft erzeugt, ausgebildet ist, lässt sich das elektrische Betätigungsglied unmittelbar am Spannglied anordnen, so dass Übertragungs- oder Übersetzungsglieder weggelassen werden können. Durch die Reduzierung der Einzelteile kann die Fertigung vereinfacht werden. Zudem lässt sich der Halter zusammen mit dem Bauteil des Spanngliedes als Modulträger nutzen, so dass alle wesentlichen Montagearbeiten vorgefertigt werden können.

In einer Ausführungsform kann die Klemmvorrichtung durch zwei Lamellenpakete gebildet werden, von denen das erste Lamellenpaket einer fahrzeugfesten Konsole und das-zweite Lamellenpaket einem relativ zur Konsole beweglichen Mantelrohr zugeordnet ist. Durch gegenseitiges Verspannen der Lammellenpakete ist die Lenksäule in ihrer Normallage gesichert.

Das Verspannen der Lamellenpakete kann gemäß einer Ausführungsform durch einen Spannbolzen erfolgen, der sowohl die Lamellenpakete als auch das Spannglied durchsetzt.

Die nicht durch das elektrische Betätigungsglied angetriebene Spannscheibe kann in einer Ausführungsform das Bauteil des Spanngliedes sein, dass einteilig mit dem Halter ausgebildet ist. Dadurch kann zum Beispiel auf Führungsmittel verzichtet werden, die für ein Mitführen des elektrischen Betätigungsgliedes beim Verschwenken oder Verschieben der Lenksäule nötig wären.

Für eine kostengünstige Ausführung kann das elektrische Betätigungsglied ein Elektromotor sein, der eine Spindel translatorisch antreibt.

Mit einer Öse am freien Ende der Spindel kann der Elektromotor in einfacher Weise an das anzutreibende Spannglied gekoppelt werden.

Dazu kann die anzutreibende Spannscheibe einen Stift aufweisen, der etwa parallel zur Erstreckung des Spannbolzens von der Spannscheibe absteht und von der Öse umfasst wird.

Um ein definiertes Verdrehen der Spannscheiben zueinander zu erreichen, kann eine Kulissenführung vorgesehen sein, die die Endlagen der ersten Spannscheibe zur zweiten Spannscheibe bestimmt.

Die Spannstellung des Spanngliedes kann dadurch erfolgen, indem die Spannscheiben an ihren einander zugewandten Innenseiten Erhebungen und Vertiefungen aufweisen. Liegen die Erhebungen der Spannscheiben aufeinander, erfolgt die Klemmung; liegen die Erhebungen der ersten Spannscheibe in den korrespondierenden Vertiefungen der zweiten Spannscheibe und umgekehrt, ist die Klemmung aufgehoben.

Anhand der Zeichnung wird im folgenden ein Ausführungsbeispiel der Erfindung erläutert. Dabei zeigen:
- Fig. 1: eine perspektivische Teilansicht einer Lenksäule mit einem Betätigungsglied für einen Klemm-Mechanismus,
- Fig. 2: eine Detaildarstellung des in Fig. 1 gezeigten Betätigungsglieds sowie
- Fig. 3: eine Einzelteildarstellung eines Halters für das Betätigungsglied gemäß Fig. 1.

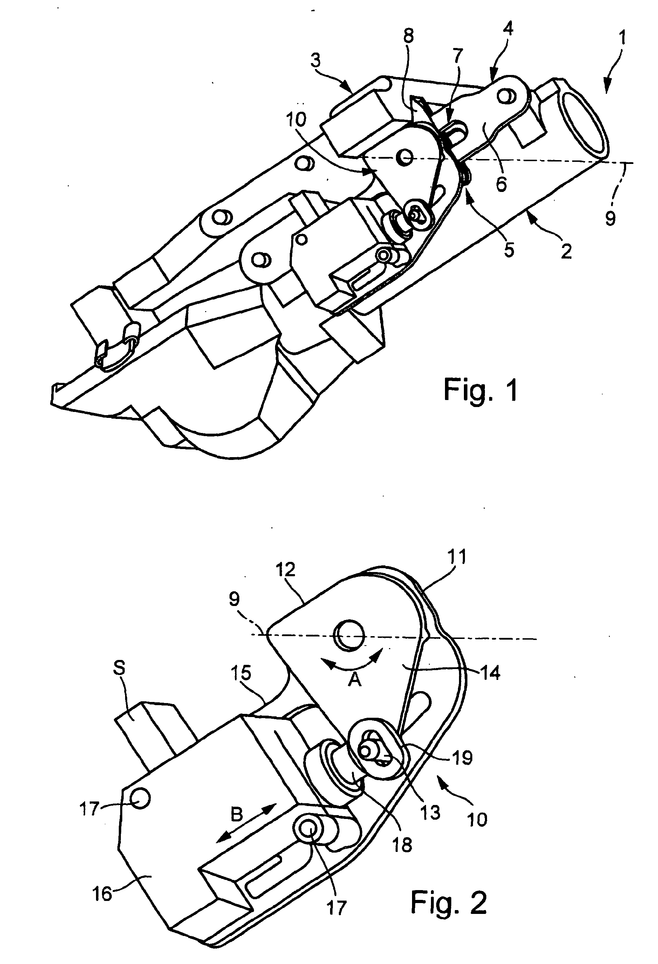

Fig. 1 zeigt eine Lenksäule 1 mit einem Mantelrohr 2, das relativbeweglich zu einer fahrzeugfesten Konsole 3 gelagert ist. Diese Lagerung erfolgt über ein dem Mantelrohr 2 zugeordneten Lamellenpaket 4 sowie ein der Konsole 3 zugeordneten Lamellenpaket 5, wobei Lamellen 6 und 8 der Lamellenpakete 4 und 5 alternierend zueinander angeordnet sind. Jede Lamelle 6 des Lamellenpaketes 4 weist ein etwa parallel zur Längsachse der Lenksäule 1 ausgerichtetes Langloch 7 auf, während jede Lamelle 8 des Lamellenpaketes 5 ein etwa rechtwinklig zur Längsachse der Lenksäule 1 verlaufendes -hier verdeckt angeordnetes und daher nicht sichtbares- Langloch aufweist. Dort, wo sich die Langlöcher der Lamellen 6 und 8 kreuzen, durchsetzt ein Spannbolzen 9 (strichpunktiert angedeutet) die Lamellen 6 und 8 der Lamellenpakete 4 und 5 sowie einen Teil des Mantelrohrs 2.

Neben Lamellenpakten 4 und 5 ist auf dem Spannbolzen 9 ein Spannglied 10 angeordnet, dass in Fig. 2 detailliert dargestellt ist. Das Spannglied 10 umfasst zwei Spannscheiben 11 und 12. Die Spannscheibe 12 ist gegenüber der Spannscheibe 11 gemäß Pfeil A verdrehbar gelagert. Zum Krafteinleiten bzw. Antreibender Spannscheibe 12 weist diese einen Stift 13 auf, der etwa parallel zum Spannbolzen 9 von der Außenseite 14 der Spannscheibe 12 absteht.

Die Spannscheibe 11 ist einteilig mit einem Halter 15 für einen Elektromotor 16 ausgebildet. Der Elektromotor 16 ist mittels Befestigungsmitteln 17 an dem Halter 15 befestigt. Der Elektromotor 16 weist einen Anschlussstutzen S für den elektrischen Anschluss auf. An einer Stirnwand des Elektromotors 16 tritt eine Spindel 18 aus, die bei Betätigen des Elektromotors 16 eine translatorische Bewegung gemäß Pfeil B ausführt. Am freien Ende der Spindel 18 ist eine Öse 19 befestigt, in der der Stift 13 der Spannscheibe 12 gelagert ist.

Bei Bewegung der Spindel 18 gemäß Pfeil B wird die Spannscheibe 12 durch Mitnahme des Stiftes 13 um den Spannbolzen 9 gemäß Pfeil A ausgelenkt.

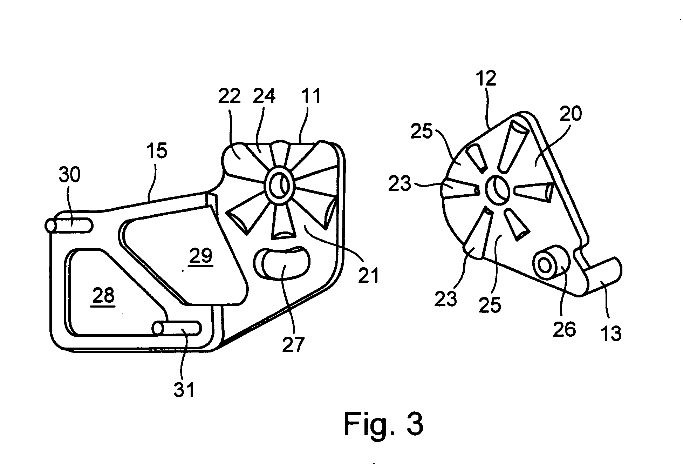

Wie aus Fig. 3 ersichtlich weist jede der Spannscheiben 11 und 12 auf ihren einander zugewandten Innenseiten 20 und 21 Erhebungen 22 bzw. 23 und Vertiefungen 24 bzw. 25 auf. Je nach Verdrehwinkel der beiden Spannscheiben 11 und 12 zueinander liegen entweder die Erhebungen 22 und 23 aufeinander; oder die Erhebungen 22 bzw. 23 liegen in den korrespondierenden Vertiefungen 25 bzw. 24. Liegen die Erhebungen 22 und 23 aufeinander, ist das Mantelrohr 2 geklemmt; liegen die Erhebungen 22 bzw. 23 in den Vertiefungen 25 bzw. 24 ist die Klemmung aufgehoben. Mittels einem an der Innenseite 20 der Spannscheibe 12 abstehenden Kulissenstein 26, die in einer in der Spannscheibe 11 eingelassenen Führung 27 geführt ist, kann die Spannscheibe 12 zwei Endlagen einnehmen.

Die Spannscheibe 11 ist einstückig mit dem Halter 15 ausgeführt. Aus Leichtbaugründen weist der etwa rechteckige Halter 15 dreieckförmige Aussparungen 28 und 29 auf. Die vom Halter 15 abstehenden Haltestifte 30 und 31 dienen zur Aufnahme des Elektromotors 16, an denen dieser mit geeigneten Mitteln befestigt wird.

Die Funktionsweise der Erfindung ist im folgenden anhand der Fig. 1 bis 3 beschrieben:

Im Fahrbetrieb ist das Mantelrohr 2 entsprechend der Darstellung in Fig. 1 geklemmt: Die Spindel 18 befindet sich im linken Totpunkt, d.h. sie ist ganz eingefahren; die Spannscheibe 12 ist in der Endlage fixiert, in der ihre Erhebungen 23 auf den Erhebungen 22 der zweiten Spannscheibe 11 liegen. Dadurch werden die Lamellenpakete 4 und 5 auf dem Spannbolzen 9 zusammengedrückt.

Für die Komforteinstellung der Lenksäule 1 drückt der Fahrer einen Knopf oder legt einen Schalter um o.ä., wodurch der Elektromotor 16 betätigt wird. Die Spindel 18 wird von ihrem linken Totpunkt gemäß Pfeil B in ihren rechten Totpunkt bewegt, d.h. sie wird ausgefahren. Dadurch nimmt die Öse 19 den Stift 13 der Spannscheibe 12 mit, so dass diese gemäß Pfeil A um die Achse des Spannbolzens 9 ausgelenkt wird. Diese Verdrehung bewirkt, dass die Spannscheibe 12 mit ihren Erhebungen 23 in die Vertiefungen 24 der Spannscheibe 11 zu liegen kommt, d.h. der auf dem Spannbolzen 9 belegte Abschnitt des Spanngliedes 10 wird reduziert. Dadurch werden die Lamellen 6 und 8 der Lamellenpakete 4 und 5 aus dem Eingriff gebracht; die Klemmung des Mantelrohrs 2 ist aufgehoben.

Der Fahrer kann nun das Lenkrad von Hand einschieben oder ausziehen, bzw. nach oben oder unten verschwenken, wobei die maximalen Verschiebewege von den Langlöchern der Lamellen 6 und 8 abhängig sind.

Damit wird eine Komfortverstellung für eine Lenksäule eines Kraftfahrzeugs zur Verfügung gestellt, bei der mittels "Knopfdruck" die Klemmung des Mantelrohrs aufgehoben wird, während die Einstellung des Lenkrades auf die gewünschte Position händisch erfolgt.

## Patentansprüche

1. Klemm-Mechanismus für eine verstellbare Lenksäule eines Kraftfahrzeugs mit einer Klemmvorrichtung, die die sich in einer bestimmten Position befindende Lenksäule freigibt oder einklemmt, und mit einem elektrischen Betätigungsglied, das ein Spannglied antreibt, welches zwischen einer Spannstellung und einer Nichtspannstellung bewegbar ist, wobei das elektrische Betätigungsglied im Nahbereich der Klemmvorrichtung an einem Halter befestigt ist, wobei das Spannglied (10) zwei gegeneinander verdrehbare Spannscheiben (11, 12) aufweist, von denen eine durch das elektrische Betätigungsglied (16) angetrieben ist;
**dadurch gekennzeichnet,**
**dass** die Spannscheiben (11, 12) an ihren einander zugewandten Innenseiten (20, 21) Erhebungen (22, 23) und Vertiefungen (24, 25) aufweisen, wobei in der ersten Endlage die Erhebungen (22, 23) der Spannscheiben (11, 12) aufeinander liegen und in der zweiten Endlage die Erhebungen (22) der ersten Spannscheibe (11) in den korrespondierenden Vertiefungen (25) der zweiten Spannscheibe (12) liegen.

2. Klemm-Mechanismus nach Anspruch 1,
**dadurch gekennzeichnet,**
**dass** die Klemmvorrichtung durch zwei Lamellenpakete (4, 5) gebildet wird, von denen das erste Lamellenpaket (5) einer fahrzeugfesten Konsole (3) und das zweite Lamellenpaket (4) einem relativ zur Konsole (3) beweglichen Mantelrohr (2) zugeordnet ist.

3. Klemm-Mechanismus nach Anspruch 2,
**dadurch gekennzeichnet,**
**dass** ein Spannbolzen (9) die Lamellenpakete (4, 5) sowie das Spannglied (10) durchsetzt.

4. Klemm-Mechanismus nach Anspruch 1,
**dadurch gekennzeichnet,**
**dass** die nicht durch das elektrische Betätigungsglied (16) angetriebene Spannscheibe (11) einteilig mit dem Halter (15) ausgebildet ist.

5. Klemm-Mechanismus nach einem der vorhergehenden Ansprüche
**dadurch gekennzeichnet,**
**dass** das elektrische Betätigungsglied ein Elektromotor (16) ist, der eine Spindel (18) translatorisch antreibt.

6. Klemm-Mechanismus nach Anspruch 5,
**dadurch gekennzeichnet,**
**dass** die Spindel (18) an ihrem freien Ende eine Öse (19) aufweist.

7. Klemm-Mechanismus nach Anspruch 6,
**dadurch gekennzeichnet,**
**dass** in der Öse (19) ein Stift (13) gelagert ist, der etwa parallel zur Erstreckung des Spannbolzens (9) von der durch den Elektromotor (16) angetriebenen Spannscheibe (12) absteht.

8. Klemm-Mechanismus nach einem der Ansprüche 1 oder 5 bis 7,
**dadurch gekennzeichnet,**
**dass** an dem Spannglied (10) eine Kulissenführung (26, 27) vorgesehen ist, die die Endlage der ersten Spannscheibe (11) zur zweiten Spannscheibe (12) bestimmt.

## Claims

1. A clamping mechanism for an adjustable steering column in a motor vehicle having a clamping mechanism which releases or clamps the steering column which is located in a given position, and having an electrical actuating element which drives a tensioning element which can be moved between a tensioned position and a non-tensioned position, the electrical actuating element being fixed to a retainer in the vicinity of the clamping mechanism, the tensioning device (10) having two tensioning discs (11, 12) which rotate in opposite directions, one of which is driven by the electrical actuating element (16),
**characterised in that**
the facing inner faces (20, 21) of the tensioning discs (11, 12) have elevations (22, 23) and indentations (24, 25), the elevations (22, 23) of the tensioning discs (11, 12) lying one on top of the other in the first end position and the elevations (22) of the first tensioning disc (11) lying in the corresponding indentations (25) in the second tensioning disc (12) in the second end position.

2. A clamping mechanism in accordance with claim 1,
**characterised in that**
the clamping mechanism takes the form of two lamellar packets (4, 5), the first lamellar packet (5) being associated with a console (3) fixed to the vehicle and the second lamellar packet (4) being associated with a jacket tube (2) which is able to move in relation to the console (3).

3. A clamping mechanism in accordance with claim 2,
**characterised in that**
a tensioning bolt (9) passes through the lamellar packets (4, 5) and the tensioning element (10).

4. A clamping mechanism in accordance with claim 1,
**characterised in that**
the tensioning disc (11) not driven by the electrical actuating element (16) is formed as one part with the retainer (15).

5. A clamping mechanism in accordance with one of the preceding claims,
**characterised in that**
the electrical actuating element is an electric motor (16) which translationally drives a spindle (18).

6. A clamping mechanism in accordance with claim 5,
**characterised in that**
an eye (19) is provided at the free end of the spindle (18).

7. A clamping mechanism in accordance with claim 6,
**characterised in that**
mounted in the eye (19) is a pin (13) which projects from the tensioning disc (12) driven by the electric motor (16) approximately parallel to the length of the tensioning bolt (9).

8. A clamping mechanism in accordance with one of claims 1 or 5 to 7,
**characterised in that**
provided on the tensioning member (10) is a sliding guide arrangement (26, 27) which determines the end position of the first tensioning disc (11) in relation to the second tensioning disc (12).

## Revendications

1. Mécanisme de blocage pour une colonne de direction réglable d'un véhicule automobile comprenant un dispositif de blocage, qui libère ou bloque la colonne de direction se trouvant dans une position définie, et un élément d'actionnement électrique, qui entraîne un élément de serrage, lequel peut être déplacé entre une position de serrage et une position de non serrage, l'élément d'actionnement électrique étant fixé dans la zone proche du dispositif de blocage sur un support, l'élément de serrage (10) présentant deux disques de serrage (11, 12) pouvant tourner l'un par rapport l'autre, dont l'un est entraîné par l'élément d'actionnement (16) électrique, **caractérisé en ce que** les disques de serrage (11, 12) présentent des élévations (22, 23) et des cavités (24, 25) sur leurs côtés intérieurs (20, 21) tournés les uns vers les autres, les élévations (22, 23) des disques de serrage (11, 12) reposant les unes sur les autres dans la première position extrême et les élévations (22) du premier disque de serrage (11) étant disposées, dans la seconde position extrême, dans les cavités (25) correspondantes du second disque de serrage (12).

2. Mécanisme de blocage selon la revendication 1, **caractérisé en ce que** le dispositif de blocage est formé par deux paquets de lamelles (4, 5), dont le premier paquet de lamelles (5) est attribué à une console (3) solidaire du véhicule, et le second paquet de lamelles (4) est attribué à un tube d'enveloppe (2) mobile par rapport à la console (3).

3. Mécanisme de blocage selon la revendication 2, **caractérisé en ce qu'**un boulon de serrage (9) traverse les paquets de lamelles (4, 5) et l'élément de serrage (10).

4. Mécanisme de blocage selon la revendication 1, **caractérisé en ce que** le disque de serrage (11) non entraîné par l'élément d'actionnement (16) électrique est conçu d'une seule pièce avec le support (15).

5. Mécanisme de blocage selon l'une quelconque des revendications précédentes, **caractérisé en ce que** l'élément d'actionnement électrique est un moteur électrique (16) qui entraîne une broche (18) par translation.

6. Mécanisme de blocage selon la revendication 5, **caractérisé en ce que** la broche (18) présente un anneau (19) sur son extrémité libre.

7. Mécanisme de blocage selon la revendication 6, **caractérisé en ce que** dans l'anneau (19) est logée une broche (13) qui déborde à peu près parallèlement à l'extension du boulon de serrage (9) du disque de serrage (12) entraîné par le moteur électrique (16).

8. Mécanisme de blocage selon l'une quelconque des revendications 1 ou 5 à 7, **caractérisé en ce qu'**il est prévu sur l'élément de serrage (10) un guide à coulisse (26, 27), qui détermine la position extrême du premier disque de serrage (11) par rapport au second disque de serrage (12).
